Europäisches Patentamt

European Patent Office

Office européen des brevets

(11) Veröffentlichungsnummer : **0 335 071 B1**

(12) **EUROPÄISCHE PATENTSCHRIFT**

(45) Veröffentlichungstag der Patentschrift :
23.10.91 Patentblatt 91/43

(51) Int. Cl.$^5$ : **C10J 3/50**

(21) Anmeldenummer : 89101155.3

(22) Anmeldetag : 24.01.89

(54) Verfahren und Vorrichtung zum pneumatischen Fördern eines feinkörnigen bis staubförmigen Brennstoffes in einen unter erhöhtem Druck stehenden Vergasungsreaktor.

(30) Priorität : 26.03.88 DE 3810404

(43) Veröffentlichungstag der Anmeldung :
04.10.89 Patentblatt 89/40

(45) Bekanntmachung des Hinweises auf die
Patenterteilung :
23.10.91 Patentblatt 91/43

(84) Benannte Vertragsstaaten :
DE ES GR

(56) Entgegenhaltungen :
EP-A- 0 101 098

(56) Entgegenhaltungen :
DD-A- 161 080
DE-A- 3 509 221
GB-A- 2 059 377
GB-A- 2 103 387

(73) Patentinhaber : Krupp Koppers GmbH
Altendorfer Strasse 120
W-4300 Essen 1 (DE)

(72) Erfinder : Baumann, Hans-Richard
Georg-Baur-Ring 7
W-4300 Essen 1 (DE)
Erfinder : Schweimanns, Hans-Reiner
Kampstrasse 7
W-4320 Hattingen 16 (DE)

EP 0 335 071 B1

## Beschreibung

Verfahren und Vorrichtung zum pneumatischen Fördern eines feinkörnigen bis staubförmigen Brennstoffes in einen unter erhöhtem Druck stehenden Vergasungsreaktor.

Die Erfindung betrifft ein Verfahren und eine Vorrichtung zum pneumatischen Fördern eines feinkörnigen bis staubförmigen Brennstoffes aus einem unter Normaldruck stehenden Vorratsbunker in einen unter erhöhtem Druck stehenden Vergasungsreaktor, in dem der Brennstoff im Flugstrom mit Sauerstoff und/oder Luft sowie gegebenenfalls Wasserdampf vergast wird, wobei alle Brenner des Vergasungsreaktors über einen zentralen Zuteilbehälter versorgt werden und die Brennstoffzufuhr zum Zuteilbehälter der Brennstoffentnahme angepaßt ist und kontinuierlich über mindestens zwei Drucktopfförderer erfolgt, die zueinander zeitlich versetzt befüllt und entleert werden.

Bei der Vergasung von feinkörnigen bis staubförmigen Brennstoffen, wie z.B. Kohlenstaub, Torf, Hydrierrückständen und/oder Flugstaub mit hohem Kohlenstoffgehalt, unter erhöhtem Druck besteht die Notwendigkeit, den zu vergasenden Brennstoff aus einem unter Normaldruck stehenden Vorratsbunker in den unter Vergasungsdruck stehenden Vergasungsreaktor zu fördern. Da hierbei normalerweise mit Vergasungsdrücken gearbeitet wird, die im Bereich zwischen 10 und 100 bar, vorzugsweise zwischen 25 und 45 bar, liegen, stellt dies ein nicht einfach zu lösendes technisches Problem dar, zu dessen Lösung bereits in der Vergangenheit unterschiedliche Vorschläge unterbreitet wurden.

So ist in der DE-PS 1189226 in Verbindung mit der DE-PS 1228742 bereits ein Verfahren vorgeschlagen worden, bei dem der zu vergasende Brennstoff mittels eines Fördergases aus dem unter Normaldruck stehenden Vorratsbunker in einen Drucktopfförderer transportiert und von dort nach entsprechender Druckerhöhung über einen Zuteilbehälter in den Vergasungsreaktor gefördert wird. Als Fördergas, das im Kreislauf wiederverwendet werden kann, wird ein Inertgas, vorzugsweise Stickstoff, oder Luft verwendet. Hierbei ist allerdings nur die Anwendung eines einzigen Drucktopfförderers vorgesehen, so daß die Beaufschlagung des Zuteilbehälters mit dem zu vergasenden Brennstoff nur diskontinuierlich erfolgen kann.

Aus der DD-A-161080 ist ferner ein Verfahren und eine Vorrichtung zum Vergasen von festen Brennstoffen in sogenannten Vergasungsrohren bekannt, die von außen beheizt werden sollen, beispielsweise durch die Abwärme eines Nuklearreaktors. Für die Brennstoffzufuhr zu den unter erhöhtem Druck stehenden Vergasungsrohren sind hierbei zwei sogen. Druckschleusenbehälter vorgesehen, die voneinander zeitlich versetzt befüllt und entleert werden. Aus dem jeweils befüllten Druckschleusenbehälter gelangt der Brennstoff, nachdem der Behälter mit dem erforderlichen Druck beaufschlagt worden ist, unter dem Einfluß der Schwerkraft in den darunterliegenden Zuteilbehälter, wobei die abgezogene Brennstoffmenge über eine Zellenradschleuse gesteuert wird. Im Zuteilbehälter wird durch Einblasen eines gasförmigen Mediums die Brennstoffschüttung in eine Wirbelschicht überführt, in die eine Förderleitung eintaucht, die mit dem jeweiligen Vergasungsrohr verbunden ist. Mit diesem Verfahren kann zwar die Brennstoffzufuhr zum Zuteilbehälter kontinuierlich durchgeführt werden. Gleichwohl ist das Verfahren insbesondere im Hinblick auf die Tatsache, daß bei großtechnischen Anlagen, deren Vergasungsreaktoren mehrere Brenner aufweisen, eine gleichmäßige und kontinuierliche Brennstoffversorgung aller Brenner unter optimalen Bedingungen gewährleistet sein sollte, verbesserungsbedürftig.

Der Erfindung liegt deshalb die Aufgabe zugrunde, das Vergasungsverfahren der eingangs genannten Art in diesem Sinne weiter zu verbessern, wobei insbesondere die Brennstoffförderung unter Einsparung von Fördergas gleichmäßig gestaltet werden soll. Gleichzeitig sollen dabei die Förderbedingungen so eingestellt werden, daß das Verfahren in einer Anlage mit möglichst kompakter Bauart durchgeführt werden.

Das der Lösung dieser Aufgabe dienende Verfahren der eingangsgenannten Art ist erfindungsgemäß dadurch gekennzeichnet, daß sowohl die Zufuhr des Brennstoffes zum Zuteilbehälter als auch der Abzug desselben aus dem Zuteilbehälter durch Differenzdruckförderung erfolgt, bei der die Brennstoffmassenströme durch Differenzdruckmessung geregelt werden und jeweils mit einer Förderstromdichte gearbeitet wird, die in der Größenordnung von 60-90% der Schüttgutdichte des eingesetzten Brennstoffes liegt.

Durch die erfindungsgemäße Arbeitsweise wird erreicht, daß sich im zentralen Zuteilbehälter, der der Versorgung aller Brenner dient, ein stabiles Niveau der Brennstoffschüttung einstellt und somit Schwankungen durch unterschiedliche Gasdurchströmung der Brennstoffschüttung im Zuteilbehälter, die die Gleichförmigkeit der Brennstofförderung zu den Brennern beeinträchtigen würden, vermieden werden.

Ein weiteres wesentliches Merkmal des erfindungsgemäßen Verfahrens ist darin zu sehen, daß bei der Zufuhr des Brennstoffes zum Zuteilbehälter und beim Abzug des Brennstoffes aus dem Zuteilbehälter mit einer hohen Förderstromdichte gearbeitet wird, die in der Größenordnung von 60-90% der Schüttdichte des eingesetzten Brennstoffes liegt. Diese hohe Förderstromdichte hat hierbei folgende Vorteile :

1. Der Bedarf an Fördergas unter erhöhtem Druck wird stark reduziert. Er liegt beispielsweise bei einem typischen Steinkohlenstaub nur noch im Bereich zwischen 1,2 und 1,5 m³ Gas/t Brennstoff.

2. Die Geschwindigkeit des Brennstoff-Gasgemisches in der Förderleitung kann auf 2 bis 8 m/s verringert werden. Dadurch wird der Verschleiß in den durchflossenen Anlageteilen minimiert.

3. In der Förderleitung stellt sich keine Pfropfenförderung, sondern die wesentlich gleichmäßigere, einem Flüssigkeitsstrom ähnelnde Fließförderung ein.

Welches Fördergas im System verwendet wird, hängt in erster Linie davon ab, welchem Zweck das bei der Vergasung erzeugte Rohgas dienen soll. Bei der Herstellung von Synthesegas ist es zweckmäßig, für die pneumatische Förderung des Brennstoffes bis zu den Drucktopfförderern sowie von diesen in den Zuteilbehälter ein inertes Gas, vorzugsweise $CO_2$, zu verwenden, während der Zuteilbehälter mit einem brennbaren Gas beaufschlagt wird, welches auch für die pneumatische Förderung des Brennstoffes vom Zuteilbehälter zu den Brennern sorgt. Auf diese Weise gelingt es, den Inertgasanteil in dem bei der Vergasung anfallenden Rohgas, der bei der Weiterverarbeitung des Rohgases zu Synthesegas einen unerwünschten Ballast darstellt, auf einen für den Prozeß akzeptablen Anteil von 1-2% zu senken. Bei dem als Fördergas dienenden brennbaren Gas kann es sich entweder um das im Verfahren erzeugte $CO_2$-freie Synthesegas oder ein Restgas oder Flashgas aus den Gasreinigungsstufen der Synthesegasanlage handeln. So kann beispielsweise das $SO_2$-haltige Restgas aus der Claus-Anlage verwendet und damit einer die Umwelt schonenden Aufbereitung im Vergasungsreaktor zugeführt werden.

Wenn dagegen das bei der Vergasung erzeugte Rohgas der Herstellung eines Brenngases, z.B. für ein Gas-Dampfturbinen-Kraftwerk, dienen soll, dann ist ein gewisser Inertgasanteil in dem bei der Vergasung anfallenden Rohgas nicht kritisch. In diesem Falle kann im gesamten System ein Inertgas, wie z.B. unreiner Stickstoff mit einem maximalen Sauerstoffgehalt von 6% und/oder $CO_2$, als Fördergas verwendet werden.

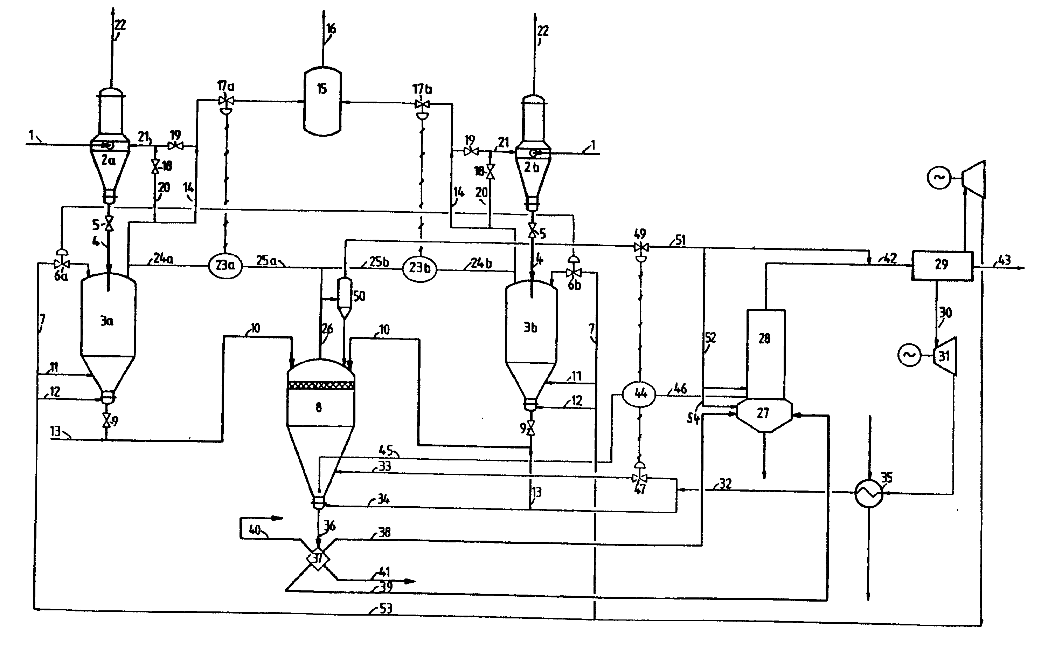

Weitere Einzelheiten des erfindungsgemäßen Verfahrens ergeben sich aus den vorliegenden Unteransprüchen sowie der nachfolgenden Verfahrensbeschreibung, in der ein Ausführungsbeispiel des erfindungsgemäßen Verfahrens, das die Erzeugung von Synthesegas betrifft, an Hand des in der Abbildung dargestellten Fließschemas weiter erläutert wird.

Hierbei wird der vom Vorratsbunker der Aufbereitungsanlage kommende, unter Normaldruck stehende Kohlenstaub mittels $CO_2$ als inertem Fördergas über die Leitung 1 in den Zyklonfilter 2a transportiert. Im Zyklonfilter 2a wird der Kohlenstaub vom Fördergas getrennt und dieses im gereinigten Zustand über die Leitung 22 abgezogen. Für den Transport werden bei einem niedrigen Überdruck von ca. 2-4 bar ca. 50 Nm³ $CO_2$ pro Tonne Kohlenstaub benötigt. Da während des Füllvorganges sowohl der Zyklonfilter 2a als auch der dazugehörige Drucktopfförderer 3a unter Normaldruck stehen, gelangt der Kohlenstaub unter dem Einfluß der Schwerkraft über die Leitung 4 in den Drucktopfförderer 3a. Sobald im Drucktopfförderer 3a der erforderliche Füllstand erreicht worden ist, wird die Kohlenstaubzufuhr über die Leitung 4 durch Schließen des Ventils 5, das in der Leitung 4 angeordnet ist, unterbrochen. Anschließend wird nach Öffnen des Ventils 6a über die Leitung 7 $CO_2$ in den Drucktopfförderer 3a gedrückt bis sich in diesem ein Druck eingestellt hat, der in der Regel 0,5 bis 2 bar über dem im Zuteilbehälter 8 herrschenden Betriebsdruck liegt. Im vorliegenden Ausführungsbeispiel herrscht im Drucktopfförderer 3a ein Druck von 31 bar, während im Zuteilbehälter 8 der Druck ca. 30 bar beträgt. Nach Öffnen des Ventils 9 wird deshalb unter dem Einfluß der Druckdifferenz der Kohlenstaub über die Förderleitung 10 in den Zuteilbehälter 8 gedrückt. Von der Leitung 7 zweigen dabei die Leitungen 11 und 12 ab, durch die zusätzliches $CO_2$ im Bereich der trichterförmigen Verjüngung über gleichmäßig verteilte Stutzen in den Drucktopfförderer 3a eingeleitet werden kann. Diese zusätzliche $CO_2$-Zufuhr dient in erster Linie dazu, die Förderstromdichte des über die Förderleitung 10 abgezogenen Kohlenstaubes erfindungsgemäß so einzustellen, daß diese in der Größenordnung von 60-90% der Schüttdichte des eingesetzten Kohlenstaubes liegt. Gleichzeitig wird durch diese Gaseinleitung eine Brückenbildung beim Auslauf des Kohlenstaubes aus dem Drucktopfförderer 3a verhindert. Die $CO_2$-Zufuhr über die Leitungen 11 und 12 wird allerdings so begrenzt, daß eine wirbelbettähnliche Auflockerung des Kohlenstaubes im Drucktopfförderer 3a vermieden wird. In die Förderleitung 10 mündet die Leitung 13, durch die im Bedarfsfalle Spülgas in die Förderleitung 10 eingeblasen werden kann, um diese Leitung nach dem Entleeren des Drucktopfförderers 3a und Schließen des Ventils 9 nachzuspülen. Als Spülgas kann in diesem Falle ein Teilstrom des erzeugten Synthesegases verwendet werden.

Nach vollständiger Entleerung des Drucktopfförderers 3a wird die Zufuhr von $CO_2$ über die Leitungen 7, 11 und 12 unterbrochen und der Drucktopfförderer 3a in zwei Phasen entspannt. In der ersten Entspannungsphase wird das $CO_2$ über die Leitung 14 in den Pufferbehälter 15 eingeleitet. Hierbei werden etwa 70% des Überdruckes im Drucktopfförderer 3a abgebaut. Das im Pufferbehälter 15 gesammelte $CO_2$ wird über die Leitung 16 abgezogen und kann zur pneumatischen Förderung des Kohlenstaubes zum Zyklonfilter 2a wiederverwendet werden. Hierbei deckt dieses $CO_2$ etwa 75% des Bedarfs. In der zweiten Entspannungsphase ist das Ventil 17a geschlossen, während die Ventile 18 und 19 geöffnet sind, so daß das leicht verunreinigte $CO_2$ über die Leitungen 20 und 21 in den Zyklonfilter 2a eingeleitet wird. Aus diesem wird das $CO_2$ nach der Abtrennung des mitgerissenen Kohlenstaubes über die Leitung 22 in die Atmosphäre abgelassen.

Dem Zuteilbehälter 8 ist erfindungsgemäß ein weiterer Drucktopfförderer 3b mit dem dazugehörigen Zyklonfilter 2b zugeordnet, wobei abwechselnd der eine Drucktopfförderer jeweils befüllt wird, während der andere jeweils entleert wird. Auf diese Weise kann der Zuteilbehälter 8 kontinuierlich mit Kohlenstaub versorgt werden, wobei die Kohlenstaubzufuhr zum Zuteilbehälter 8 der Kohlenstaubentnahme soweit angepaßt wird, daß das Niveau der Kohlenstaub schüttung im Zuteilbehälter 8 nur ganz geringe Schwankungen aufweist. Der Bereich dieser Schwankungen ist in der Abbildung schraffiert eingezeichnet. Die dem Drucktopfförderer 3b und dem Zyklonfilter 2b zugeordneten Leitungen und Ventile haben jeweils die gleichen Bezugszeichen wie die entsprechenden Leitungen und Ventile am Drucktopfförderer 3a und am Zyklonfilter 2a. Da diese Leitungen und Ventile funktionsgleich sind, braucht auf ihre Wirkungsweise hier nicht nochmals näher eingegangen zu werden.

Erfindungsgemäß ist vorgesehen, daß die Drucktopfförderer 3a und 3b neben und nicht senkrecht über dem Zuteilbehälter 8 angeordnet sind und mit diesem jeweils nur über die Förderleitung 10 in Verbindung stehen. Dadurch wird einerseits eine kompakte Bauweise der gesamten Anlage ermöglicht und andererseits verhindert, daß die Brennstoff-Förderung zum Zuteilbehälter 8 über die Förderleitung 10 unter dem Einfluß der Schwerkraft erfolgt, was deren Regulierbarkeit beeinträchtigen würde. Die Auslegung der Drucktopfförderer 3a und 3b erfolgt dabei unter Beachtung der allgemein bekannten und der speziell für den eingesetzten Brennstoff ermittelten Daten in der Weise, daß eine vollständige und gleichmäßige Entleerung der Drucktopfförderer über die Förderleitung 10 ohne zusätzliche Zugabe von Fördergas in diese Leitung gewährleistet ist. Die Entleerung der Drucktopfförderer 3a und 3b wird abwechselnd jeweils dann eingeleitet, wenn im Zuteilbehälter 8 ein minimal zulässiger Brennstoff-Füllstand erreicht wurde. Dieser minimale Füllstand ist in der Abbildung durch die untere Begrenzungslinie des schraffierten Bereiches im Zuteilbehälter 8 gekennzeichnet. Der Massenstrom bei der Entleerung richtet sich nach dem eingestellten und automatisch nachgeregelten Differenzdruck zwischen den Drucktopfförderern 3a und 3b und dem Zuteilbehälter 8. Dieser Differenzdruck wird durch die Differenzdruckmesser 23a und 23b ermittelt, die über die Impulsleitungen 24a und 24b mit den Drucktopfförderern 3a und 3b und über die Impulsleitungen 25a und 25b mit dem Zuteilbehälter 8 in Verbindung stehen und über Differenzdruckregler auf die Ventile 6a bzw. 6b und 17a bzw. 17b einwirken. Die Funktionsweise der Differenzdruckregelung ist hierbei wie folgt:

Der Brennstoffmassenstrom in den vom Zuteilbehälter 8 zum Vergasungsreaktor 27 führenden Leitungen 38, 39, 40 und 41 wird ermittelt und zu einem Brennstoff-Gesamtmassenstrom addiert. Durch geeignete Meßgeräte in den Leitungen 38, 39, 40 und 41 wird dieser Massenstrom entsprechend der Auslegung des Vergasungsreaktors 27 auf Vollast eingestellt. Dieser Massenstrom kann nur aufrecht erhalten werden, wenn zwischen dem Zuteilbehälter 8 und dem Vergasungsreaktor 27 ein konstanter Differenzdruck einreguliert und gehalten wird. Dieser Differenzdruck wird durch den Differenzdruckmesser 44 ermittelt, der über die Impulsleitung 45 mit dem Zuteilbehälter 8 und über die Impulsleitung 46 mit dem Vergasungsreaktor 27 in Verbindung steht. Der Differenzdruckmesser 44 wirkt dabei auf das Regelventil 47 für die Gaszufuhr zum Zuteilbehälter 8 über die Leitung 33 und auf das Regelventil 49 für den Gasabzug aus dem Zuteilbehälter 8 ein. Der Sollwert des Differenzdruckmessers 44 kann hierbei automatisch oder durch manuellen Eingriff verändert werden.

Die Funktion der bereits weiter oben beschriebenen Differenzdruckmesser 23a und 23b ist vergleichbar mit der Funktion des Differenzdruckmessers 44. Der Sollwert der Differenzdruckmesser 23a und 23b wird im Verhältnis zum Sollwert des Differenzdruckmessers 44 automatisch angepaßt. Damit ist der Brennstoffmassenstrom zum Vergasungsreaktor 27 die Führungsgröße für die Nachförderung von Brennstoff aus den Drucktopfförderern 3a und 3b zum Zuteilbehälter 8. Da die Förderleitung 10 vom Drucktopfförderer 3a zum Zuteilbehälter 8 einen anderen Druckverlust haben kann als die entsprechende Leitung vom Drucktopfförderer 3b zum Zuteilbehälter 8, müssen die jeweiligen Differenzdrucke durch zwei getrennte Differenzdruckmesser 23a und 23b ermittelt und geregelt werden. Die Veränderung des Sollwertes der Differenzdruckmesser 23a und 23b kann auch direkt im Verhältnis zum Brennstoff-Gesamtmassenstrom in den zum Vergasungsreaktor 27 führenden Leitungen erfolgen. Da die Ermittlung der Massenströme in den zum Vergasungsreaktor 27 führenden Leitungen sowie die Ermittlung des Gesamtmassenstromes nicht Gegenstand der vorliegenden Erfindung sind, wird hier auf eine nähere Erläuterung verzichtet.

Der durch die Differenzdruckregelung eingestellte Brennstoff-Massenstrom soll dabei eine Schwankungsbreite von 100% bis 25% aufweisen können, damit ein nahezu konstanter Füllstand im Zuteilbehälter 8 unter allen Betriebsbedingungen gewährleistet ist.

Der Zuteilbehälter 8 dient, wie bereits festgestellt wurde, der zentralen Brennstoffversorgung aller Brenner des Vergasungsreaktors 27. Im vorliegenden Ausführungsbeispiel wird als Fördergas für den Transport des Kohlenstaubes vom Zuteilbehälter 8 zu den Brennern im Vergasungsreaktor 27 ein Teilstrom des erzeugten Synthesegases ($CO + H_2$) verwendet. Dieser Teilstrom wird aus der Gasbehandlungsanlage 29 über die Leitung 30 abgezogen und im Verdichter 31 auf den erforderlichen Druck gebracht. Anschließend gelangt das Synthesegas über die Leitung 32 zu den Leitungen 33 und 34, über die es im Bereich der trichterförmigen Verjüngung des Zuteilbehälters 8 über gleichmäßig verteilte Stutzen in diesen eingeleitet wird. Das über die Leitung 32 abgezogene Synthesegas wird dabei im dampfbeheizten Wärmetauscher 35 soweit erwärmt, bis es mindestens die Temperatur des Kohlenstaubes im Zuteilbehälter 8 aufweist. Aus diesem wird der Kohlenstaub über die Leitung 36 abgezogen, wobei die Gaszufuhr über die Leitung 33 und 34 so eingestellt wird, daß eine Brückenbildung des Kohlenstaubes vermieden wird und die Förderstromdichte in der Leitung 36 sowie den nachgeschalteten, zu den Brennern führenden Leitungen in der Größenordnung von 60-90% der Schüttdichte des eingesetzten Kohlenstaubes liegt. Über die Leitung 36 gelangt der Kohlenstaub in den Verteiler 37, von wo er gleichmäßig verteilt über die Leitungen 38, 39, 40 und 41 den vier in der Abbildung nicht dargestellten Brennern des Vergasungsreaktors 37 zugeführt wird. Die Leitungen 40 und 41 sind hierbei in der Abbildung nur kurz angedeutet. Die Brenner sind im Vergasungsreaktor 27 symmetrisch in einer Ebene in der Form angeordnet, daß sich jeweils zwei Brenner gegenüber stehen. Selbstverständlich kann in der Praxis die Zahl und Anordnung der Brenner auch von dem vorliegenden Beispiel abweichen. Im Vergasungsreaktor 27 wird der Kohlenstaub im Flugstrom mit Sauerstoff und-/oder Luft sowie gegebenenfalls Wasserdampf in an sich bekannter Weise vergast, wobei das anfallende Rohgas im Abhitzekessel 28, der mit dem Vergasungsreaktor 27 zu einer Baueinheit zusammengefaßt ist, gekühlt und anschließend bei der Leitung 42 der Gasbehandlungsanlage 29 zugeführt wird. In dieser erfolgt die Umwandlung des Rohgases in Synthesegas, welches über die Leitung 43 abgezogen und seiner weiteren Verwendung zugeführt werden kann.

Sowohl die Vergasung des Kohlenstaubes als auch die Weiterverarbeitung des bei der Vergasung anfallenden Rohgases zu Synthesegas erfolgen dabei in an sich bekannter Weise. Auf Einzelheiten dieser Verfahrensschritte braucht hier nicht näher eingegangen zu werden, da diese nicht Gegenstand der vorliegenden Erfindung sind.

Da für die Vergasungsreaktion des Kohlenstaubes nur eine kurze Verweilzeit zur Verfügung steht, muß für die Kohlenstaubzufuhr zu den Brennern des Vergasungsreaktors 27 eine hohe Gleichförmigkeit des Kohlenstaub-Massenstromes gewährleistet sein. Da sich bei der Durchführung des erfindungsgemäßen Verfahrens auf Grund der kontinuierlichen Nachförderung von Kohlenstaub aus den Drucktopfförderern 3a und 3b in den Zuteilbehälter 8 in diesen ein relativ stabiles Niveau der Kohlenstaubschüttung sowie eine stabile Gasströmung einstellen, wird diese Forderung bei Anwendung des erfindungsgemäßen Verfahrens voll erfüllt. Es kann hierbei ein Schwankungsbereich der Förderstromdichte von nur ± 2% gewährleistet werden. Die Auslegung des Zuteilbehälters 8 erfolgt dabei unter Beachtung der allgemein bekannten und der speziell für den eingesetzten Brennstoff ermittelten Daten in der Weise, daß eine vollständige und gleichmäßige Entleerung über die Leitung 36 ohne zusätzliche Zugabe von Fördergas in diese Leitung gewährleistet ist. Der Massenstrom bei der Förderung des Kohlenstaubes vom Zuteilbehälter 8 zu den einzelnen Brennern des Vergasungsreaktors 27 richtet sich nach dem eingestellten und automatisch nachgeregelten Differenzdruck zwischen dem Zuteilbehälter 8 und dem Vergasungsreaktor 27. Auf die Einzelheiten dieser Differenzdruckregelung ist bereits weiter oben eingegangen worden.

Da bei der Herstellung von Synthesegas das während des Füllvorganges aus den Drucktopfförderern 3a bzw. 3b in den Zuteilbehälter 8 eindringende, als Fördergas dienende $CO_2$ durch über die Leitungen 33 und 34 eingeleitetes Synthesegas weitgehend verdrängt werden muß, entsteht im Zuteilbehälter 8 ein über dem Sollwert liegender Überdruck. Über die Leitung 26 wird deshalb überschüssiges Fördergas aus dem Zuteilbehälter 8 abgezogen. Hierbei handelt es sich um ein Mischgas aus Synthesegas und $CO_2$, wobei der $CO_2$-Anteil überwiegt. Da bei der Vergasung des Kohlenstaubes im Vergasungsreaktor 27 ohnehin ein $CO_2$-haltiges Rohgas erzeugt wird, kann dieses Mischgas entweder in den Quenchteil des Vergasungsreaktors 27 zurückgeführt oder dem bei der Vergasung erzeugten Rohgas vor dessen Eintritt in die Gasbehandlungsanlage 29 zugesetzt werden. Das über die Leitung 26 abgezogene Gas wird deshalb zunächst im Filter 50 vom mitgerissenen Kohlenstaub befreit und gelangt dann über die Leitungen 51 und 52 in den Quenchteil des Vergasungsreaktors 27 bzw. die Gasbehandlungsanlage 29. Die Menge des über die Leitung 26 aus dem Zuteilbehälter 8 abgezogenen Gases wird dabei durch das Ventil 49 in der Leitung 51 geregelt. Durch die erfindungsgemäße Rückführung dieses Gases in den Vergasungsreaktor 27 bzw. die Gasbehandlungsanlage 29 wird sichergestellt, daß kein Synthesegas in den inerten Gasweg der Drucktopfförderer 3a und 3b sowie der Zyklonfilter 2a und 2b gelangt. Damit ist die weiter oben beschriebene Rückgewinnung des in diesen Aggregaten als

inertes Fördermedium verwendeten $CO_2$ gewährleistet, und eine Belastung der Umwelt durch Ausstoß eines nicht inerten Fördergases über die Leitung 22 wird vermieden. Soweit in das Verfahren frisches $CO_2$ eingeführt werden muß, erfolgt dessen Zufuhr nach entsprechender Verdichtung über die Leitung 53. Hierbei kann das in der Gasbehandlungsanlage 29 aus dem Rohgas abgetrennte $CO_2$ mitverwendet werden.

Wenn dagegen bei der Erzeugung von Brenngas im gesamten System sauerstoffhaltiger Stickstoff, der beispielsweise aus der den Vergasungssauerstoff liefernden Luftzerlegungsanlage stammen kann, als Fördergas verwendet werden soll, dann muß das aus dem Zuteilbehälter 8 über die Leitungen 26, 51 und 52 abgezogene überschüssige Gas auf jeden Fall über die Leitung 54 in die Reaktionszone des Vergasungsreaktors 27 eingeleitet werden.

## Patentansprüche

1. Verfahren zum pneumatischen Fördern eines feinkörnigen bis staubförmigen Brennstoffes aus einem unter Normaldruck stehenden Vorratsbunker in einen unter erhöhtem Druck stehenden Vergasungsreaktor, in dem der Brennstoff im Flugstrom mit Sauerstoff und/oder Luft sowie gegebenenfalls Wasserdampf vergast wird, wobei alle Brenner des Vergasungsreaktors über einen zentralen Zuteilbehälter versorgt werden und die Brennstoffzufuhr zum Zuteilbehälter der Brennstoffentnahme angepaßt ist und kontinuierlich über mindestens zwei Drucktopfförderer erfolgt, die zueinander zeitlich versetzt befüllt und entleert werden, dadurch gekennzeichnet, daß sowohl die Zufuhr des Brennstoffes zum Zuteilbehälter als auch der Abzug desselben aus dem Zuteilbehälter durch Differenzdruckförderung erfolgt, bei der die Brennstoffmassenströme durch Differenzdruckmessung geregelt werden und jeweils mit einer Förderstromdichte gearbeitet wird, die in der Größenordnung von 60-90% der Schüttgutdichte des eingesetzten Brennstoffes Liegt.

2. Verfahren nach Anspruch 1, dadurch gekennzeichnet, daß bei der Erzeugung von Synthesegas der Brennstoff mittels eines Inertgases, vorzugsweise $CO_2$, in die Drucktopfförderer gefördert und in diesen auf den Arbeitsdruck gebracht wird, während der Zuteilbehälter mit einem brennbaren Gas beaufschlagt wird.

3. Verfahren nach Anspruch 1, dadurch gekennzeichnet, daß bei der Erzeugung von Brenngas im gesamten System ein Inertgas als Fördergas verwendet wird.

4. Verfahren nach den Ansprüchen 1 bis 3, dadurch gekennzeichnet, daß das am Zuteilbehälter anfallende überschüssige Fördergas in den Vergasungsreaktor und/oder die Gasbehandlungsanlage zurückgeführt wird.

5. Verfahren nach den Ansprüchen 1 bis 4, dadurch gekennzeichnet, daß dem Brennstoff beim Austritt aus den Drucktopfförderern zusätzliches Fördergas in einer solchen Menge zugemischt wird, daß sich unter Vermeidung einer Brückenbildung die gewünschte Förderstromdichte einstellt.

6. Vorrichtung zur Durchführung des Verfahrens nach den Ansprüchen 1 bis 5, dadurch gekennzeichnet, daß die Drucktopfförderer (3a, 3b) neben dem Zuteilbehälter (8) angeordnet sind und mit diesem nur über die Förderleitung (10) in Verbindung stehen.

## Claims

1. Process for pneumatically conveying fine-grained to dusty fuel from an unpressurised stock bunker into a pressurized gasification reactor in which the fuel is gasified in pneumatic flow with oxygen and/or air as well as optionally steam, all the burners of the gasification reactor being supplied via one central metering vessel and the fuel feed to the metering vessel being matched to the fuel take and being effected continuously by means of at least two pressure pot conveyors which are filled and emptied with a mutual offset in time, characterized in that both the feeding of the fuel to the metering vessel and the taking of the said fuel from the metering vessel are effected by differential-pressure conveying, in which the fuel mass flows are controlled by differential pressure measurement and a conveying stream density of the order of magnitude of 60-90% of the bulk density of the fuel employed is used in each case.

2. Process according to Claim 1, characterized in that, in the production of synthesis gas, the fuel is conveyed into the pressure pot conveyors and brought therein to the working pressure by means of an inert gas, preferably $CO_2$, whereas the metering vessel is charged with a combustible gas.

3. Process according to Claim 1, characterized in that, in the production of fuel gas, an inert gas is used as the conveying gas throughout the system.

4. Process according to Claims 1 to 3, characterized in that the excess conveying gas arising at the metering vessel is recycled into the gasification reactor and/or the gas treatment unit.

5. Process according to Claims 1 to 4, characterized in that additional conveying gas is admixed to the fuel leaving the pressure pot conveyors at such a rate that the desired conveying stream density is established while avoiding bridging.

6. Equipment for carrying out the process according to Claims 1 to 5, characterized in that the pressure pot conveyors (3a, 3b) are arranged to the side of the metering vessel (8) and are connected to the latter only via the conveying line (10).

## Revendications

1. Procédé pour le transport d'un combustible finement granulé à pulvérulent d'un silo de stockage à la pression normale à un réacteur de gazéification à haute pression, dans lequel le combustible est gazéifié en écoulement avec de l'oxygène et/ou de l'air et éventuellement de la vapeur d'eau, dans lequel tous les brûleurs du réacteur de gazéification sont alimentés par l'intermédiaire d'un réservoir central de dosage et où l'apport de combustible au réservoir de dosage est adapté au prélèvement de combustible et est opéré en continu par au moins deux transporteurs à pots sous pression qui sont remplis et vidés avec un décalage de temps l'un par rapport à l'autre, caractérisé en ce qu'aussi bien l'apport du combustible au réservoir de dosage que son prélèvement hors du réservoir de dosage sont réalisés par un transport à pression différentielle, dans lequel les courants massiques de combustible sont régulés par la mesure de la pression différentielle, et en ce que l'on opère toujours avec une densité de courant de transport qui est de l'ordre de 60-90% de la densité en vrac du combustible utilisé.

2. Procédé suivant la revendication 1, caractérisé en ce que, pour la production de gaz de synthèse, le combustible est transporté au moyen d'un gaz inerte, de préférence de $CO_2$, dans les transporteurs à pots sous pression, et est porté dans ceux-ci à la pression de travail, tandis que le réservoir de dosage est alimenté avec un gaz combustible.

3. Procédé suivant la revendication 1, caractérisé en ce que, pour la production de gaz combustible, on utilise un gaz inerte comme gaz de transport dans le système tout entier.

4. Procédé suivant les revendications 1 à 3, caractérisé en ce que le gaz de transport excédentaire arrivant au réservoir de dosage est renvoyé dans le réacteur de gazéification et/ou dans l'installation de traitement des gaz.

5. Procédé suivant les revendications 1 à 4, caractérisé en ce qu'à la sortie des transporteurs à pots sous pression, on mélange au combustible un gaz de transport additionnel en une quantité telle que la densité de courant de transport désirée s'établit tout en évitant la formation de ponts.

6. Dispositif pour la mise en oeuvre du procédé suivant les revendications 1 à 5, caractérisé en ce que les transporteurs à pots sous pression (3a, 3b) sont disposés à côté du réservoir de dosage (8) et ne communiquent avec lui que par la conduite de transport (10).